# EUROPÄISCHE PATENTANMELDUNG

(11) **EP 4 318 686 A2**
(43) Veröffentlichungstag der Anmeldung: **07.02.2024**
(21) Anmeldenummer: 23183849.1
(22) Anmeldetag: 06.07.2023
(51) Int. Cl.: H01M 8/0204, H01M 8/2404, C25B 11/00

(54) **VERPACKUNGSANORDNUNG SOWIE VERPACKUNGSSYSTEM FÜR SEPARATORPLATTEN**

(30) Priorität: 07.07.2022 DE 202022103814 U
(71) Anmelder: REINZ-Dichtungs-GmbH, 89233 Neu-Ulm (DE)
(72) Erfinder: STÖHR, Thomas, 88471 Laupheim (DE); BRODIAK, Rachel, 89075 Ulm (DE); TORRUBIAS, Benedicto, 89077 Ulm (DE)
(74) Vertreter: Pfenning, Meinig & Partner mbB

(57) **Zusammenfassung**

Das vorliegende Dokument betrifft eine Verpackungsanordnung mit einer Grundplatte, mindestens einem an der Grundplatte (2) befestigten ersten Bolzen (301) und einer Vielzahl von Separatorplatten (1) für ein elektrochemisches System, die entlang einer Stapelrichtung auf der Grundplatte (2) einen Separatorplattenstapel bildend gestapelt sind. Der erste Bolzen (301) ist in entlang der Stapelrichtung fluchtenden ersten Aussparungen (101) der gestapelten Separatorplatten (1) aufgenommen.

## Beschreibung

Die vorliegende Offenbarung betrifft eine Verpackungsanordnung sowie ein Verpackungssystem mit wenigstens zwei entsprechenden Verpackungsanordnungen.

Die Verpackungsanordnung eignet sich insbesondere für die Verpackung einer Vielzahl von Separatorplatten für ein elektrochemisches System, insbesondere für Brennstoffzellen, Elektrolyseure, elektrochemische Verdichter, Redox-Flow-Batterien sowie Befeuchter von elektrochemischen Systemen.

Typischerweise werden Separatorplatten auf einer Hohlkammerplatte gestapelt und mit einer Hohlkammerplatte abgedeckt. In mit Hohlkammerplatten ausgekleideten Kleinladungsträgern (KLT) wird der Separatorplattenstapel befestigt und transportiert.

Dabei besteht die Gefahr, dass die Separatorplatten beschädigt werden. Ferner ist eine Automatisierung des Prozesses derart nicht realisierbar. Die Verwendung von Standard-Hohlkammerplatten erfordert es zudem oft, dass noch zusätzliches Füllmaterial benötigt wird, damit die Stapel von Separatorplatten in den standardisierten KLTs nicht verrutschen und so beschädigt werden können. Meist werden die Hohlkammerplatten nicht wiederverwendet, da sie ohne weitere Maßnahmen oftmals verschmutzt werden. Somit fällt bei den aktuellen Verpackungssystemen eine beträchtliche Abfallmenge an.

Der vorliegenden Erfindung liegt daher die Aufgabe zugrunde zumindest eines dieser Probleme zu adressieren und eine verbesserte Verpackungsanordnung und/oder ein verbessertes Verpackungssystem vorzuschlagen. Des Weiteren wird ein verbessertes Verfahren zum Verpacken von Separatorplatten für ein elektrochemisches System beschrieben.

Zumindest eine dieser Aufgaben wird gelöst durch eine Verpackungsanordnung gemäß Anspruch 1 oder ein Verpackungssystem gemäß dem nebengeordneten Anspruch.

Die vorliegend vorgeschlagene Verpackungsanordnung umfasst eine Grundplatte, mindestens einen an der Grundplatte befestigten ersten Bolzen und eine Vielzahl von Separatorplatten für ein elektrochemisches System, insbesondere für eine Brennstoffzelle, für einen Elektrolyseur, für einen elektrochemischen Verdichter, für eine Redox-Flow-Batterie oder für einen Befeuchter eines elektrochemischen Systems. Die Vielzahl von Separatorplatten ist entlang einer Stapelrichtung auf der Grundplatte einen Separatorplattenstapel bildend gestapelt. Der erste Bolzen ist in entlang der Stapelrichtung fluchtenden ersten Aussparungen der gestapelten Separatorplatten aufgenommen.

In Stapelrichtung zwischen den Separatorplatten können Trennelemente angeordnet sein. Insbesondere kann jeweils ein Trennelement in Form eines Trennpapiers zwischen zwei übereinander gestapelten Separatorplatten angeordnet sein. Die Trennelemente können ein Aneinanderhaften der gestapelten Separatorplatten, insbesondere ein Aneinanderhaften von an den Separatorplatten angeordneten Dichtungen, und/oder Beschädigungen aufgrund von Reibung zwischen den Separatorplatten verhindern oder zumindest vermindern. Die Trennelemente können beispielsweise aus Pergamentpapier sein oder dieses umfassen. Zusätzlich oder alternativ können die Trennelemente polymerbasierte Folien, z.B. Polyesterfolien, Wachspapier oder Hartpapier umfassen. Die Trennelemente dienen nur der Trennung der Separatorplatten. Vorzugsweise nicht als Trennelemente zu verstehen sind Membranelektrodenanordnungen oder andere Elemente, die in einem funktionsfähigen Brennstoffzellstapel oder sonstigen funktionsfähigen Stapel eines elektrochemischen Systems zwischen den Separatorplatten angeordnet werden.

Der erste Bolzen kann die Separatorplatten relativ zur Grundplatte in zumindest einer Richtung fixieren. Zusätzlich kann auf der Grundplatte zumindest ein Anschlag vorgesehen sein, beispielsweise in Form einer oder mehrerer Rippen, die sich von der Grundplatte in Stapelrichtung erstrecken.

In einer Ausführungsform weist die Verpackungsanordnung mindestens einen an der Grundplatte befestigten zweiten Bolzen auf. Der zweite Bolzen kann in entlang der Stapelrichtung fluchtenden zweiten Aussparungen der gestapelten Separatorplatten aufgenommen sein. Der zweite Bolzen kann die Separatorplatten relativ zur Grundplatte in zumindest einer Richtung fixieren. Der erste und der zweite Bolzen sind dabei typischerweise in einer Richtung quer zur Stapelrichtung voneinander beabstandet angeordnet. Die ersten und die zweiten Aussparungen sind typischerweise in einer Richtung quer zur Stapelrichtung voneinander beabstandet angeordnet.

In einer Ausführungsform fixieren der erste Bolzen und der zweite Bolzen den Separatorplattenstapel relativ zur Grundplatte entlang einer ersten Richtung senkrecht zur Stapelrichtung und entlang einer zweiten Richtung senkrecht zur Stapelrichtung und senkrecht zur ersten Richtung.

Insbesondere kann derart eine Fixierung erreicht werden, in der sowohl translatorische Bewegungen der Separatorplatten quer zur Stapelrichtung sowie eine Rotation der Separatorplatten um eine durch die Stapelrichtung verlaufende Gerade gesperrt sind.

Die Stapelrichtung kann sich beispielsweise entlang einer z-Richtung erstrecken, die senkrecht zu einer x-Richtung sowie senkrecht zu einer y-Richtung ist. Die Grundplatte kann sich in oder parallel zu einer xy-Ebene erstrecken. Die xy-Ebene ist eine Ebene, in der eine in x-Richtung verlaufende Gerade und eine in y-Richtung verlaufende Gerade liegen. Dementsprechend können sich der erste und der zweite Bolzen in z-Richtung erstrecken, sodass eine Bewegung der Separatorplatten in x-Richtung und y-Richtung gesperrt sind.

Eine Fixierung der Separatorplatten an der Grundplatte mittels zweier durch Ausnehmungen in den Separatorplatten greifenden Bolzen ist beispielsweise vorteilhaft, um eine Beschädigung der Separatorplatten, beispielsweise eine Beschädigung von Außenkanten der Separatorplatten oder ein Verbiegen der Separatorplatten, bei einem Transport zu vermeiden.

In einer beispielhaften Ausführung können der erste und/oder der zweite Bolzen mit der Grundplatte verschraubt sein. Insbesondere können der erste und/oder der zweite Bolzen an seinem unteren Ende ein Außengewinde aufweisen und die Grundplatte kann an ihrer Oberseite eine erste Bohrung mit einem Innengewinde zum Aufnehmen des ersten Bolzens und/oder eine zweite Bohrung mit einem Innengewinde zum Aufnehmen des zweiten Bolzens aufweisen. Das jeweilige Innengewinde der Grundplatte kann derart ausgebildet sein, dass es mit dem jeweiligen Außengewinde des ersten und/oder zweiten Bolzens korrespondiert. Um eine Einschraubtiefe zu begrenzen, können der erste und/oder der zweite Bolzen am oberen Ende des Außengewindes einen Kragen aufweisen, dessen Durchmesser größer ist als die entsprechend korrespondierende Bohrung der Grundplatte zur Aufnahme des Gewindes des jeweiligen Bolzens. Dabei kann eine Senkbohrung mit größerem Innendurchmesser in der Grundplatte vorgesehen sein, in die der Kragen eintaucht, sodass eine Oberseite des Kragens bündig mit der Oberseite der Grundplatte abschließt. Das Innengewinde kann in der Grundplatte selbst ausgebildet sein, kann aber auch als metallisches Einlegeteil ausgebildet sein, das wiederum über eine Schraube fixiert sein kann, über ein eigenes Gewinde in der Grundplatte eingeschraubt sein kann oder im Fall einer gespritzten Kunststoffplatte als Grundplatte in diese eingelegt und von deren Material umspritzt sein kann. Grundsätzlich ist es aber auch möglich, kein Innengewinde, sondern nur eine Aussparung auf der Unterseite der Grundplatte vorzusehen und das freie Ende des Bolzens formschlüssig zu fixieren, beispielsweise mittels einer Schraubenmutter oder über eine Schraube und ein Innengewinde am Bolzen zu fixieren.

In möglichen Ausführungsformen der Verpackungsanordnung können mehr als zwei Bolzen vorgesehen sein, die jeweils in entlang der Stapelrichtung fluchtenden Aussparungen der gestapelten Separatorplatten aufgenommen sind. Es kann jedoch ausreichend sein, wenn genau zwei Bolzen vorgesehen sind, um sowohl lineare als auch rotatorische Bewegungen zu unterbinden oder begrenzen.

In einer Ausführung der Verpackungsanordnung haben die Separatorplatten und/oder die Grundplatte senkrecht zur Stapelrichtung eine rechteckige oder eine im Wesentlichen rechteckige Form, insbesondere mit abgerundeten Ecken. Vorliegend fällt unter "im Wesentlichen rechteckig" auch eine Knochenform, d.h. beispielsweise eine längliche Form, die entlang ihrer Längsrichtung zumindest einen, vorzugsweise zentralen oder im Wesentlichen zentralen, Abschnitt geringerer Breite aufweist. Vorzugsweise ist die Knochenform entlang ihrer Längsachse und/oder Breitenachse symmetrisch oder im Wesentlichen symmetrisch. Beispielsweise zur automatischen Erkennung der Ausrichtung der Grundplatte können jedoch auch asymmetrische Formen bevorzugt sein. Insbesondere kann die Grundplatte eine Knochenform aufweisen und die Separatorplatten können eine rechteckige Form aufweisen.

Insbesondere können die ersten Aussparungen und die zweiten Aussparungen der Separatorplatten in einander diagonal gegenüberliegenden Eckbereichen der Separatorplatten ausgebildet sein. Dies kann insbesondere vorteilhaft sein, um den Separatorplattenstapel sicher auf der Grundplatte zu fixieren. Grundsätzlich ist es jedoch auch möglich, die ersten und zweiten Aussparungen der Separatorplatten in Eckbereichen benachbart derselben Längskante anzuordnen.

In einer Ausführungsform weist die Verpackungsanordnung eine Deckplatte auf. Die Deckplatte kann eine rechteckige oder eine im Wesentlichen rechteckige Form aufweisen. Der Separatorplattenstapel kann in Stapelrichtung zwischen der Grundplatte und der Deckplatte angeordnet sein. Dies hat den Vorteil, dass der Separatorplattenstapel besser vor Beschädigungen, insbesondere durch mechanische Einflüsse, auf den Separatorplattenstapel, geschützt ist. Zudem schützt die Deckplatte ebenso wie die Grundplatte den Separatorplattenstapel vor Verschmutzungen.

Die Deckplatte kann flächenmäßig größer sein als eine Fläche der jeweiligen Separatorplatte. Zusätzlich oder alternativ kann die Deckplatte derart ausgebildet sein, dass sie zumindest bereichsweise über Außenkanten des Separatorplattenstapels hinausragt. Gleichzeitig schützen die überstehenden Außenkanten der Grund- und/oder Deckplatte Personen, die mit dem Separatorplattenstapel umgehen, vor Verletzungen.

Insbesondere können Eckbereiche der Deckplatte über Eckbereiche des Separatorplattenstapels hinausragen. Zusätzlich oder alternativ können Eckbereiche der Grundplatte über Eckbereiche des Separatorplattenstapels hinausragen. So können die Außenkanten des Separatorplattenstapels besser vor Beschädigungen geschützt werden, was insbesondere bei sehr dünnen Metallblechen, wie sie vor allem bei Separatorplatten für Brennstoffzellen zum Einsatz kommen, einen erheblichen Vorteil darstellt.

In einer Ausführungsform weist die Deckplatte eine erste Aussparung auf, die entlang der Stapelrichtung mit den ersten Aussparungen der Separatorplatten fluchtet. Insbesondere sofern zweite Aussparungen in den Separatorplatten und ein zweiter Bolzen vorgesehen sind, kann die Deckplatte mindestens eine zweite Aussparung aufweisen, die entlang der Stapelrichtung mit den zweiten Aussparungen der Separatorplatten fluchtet.

Die erste und/oder die zweite Aussparung der Deckplatte können als Durchgangslöcher oder als Sacklöcher ausgebildet sein. Die Aussparungen der Deckplatte können gleich groß oder kleiner als die Aussparungen der Grundplatte ausgebildet sein.

Der erste Bolzen kann zusätzlich in der ersten Aussparung der Deckplatte aufgenommen sein. Der zweite Bolzen kann zusätzlich in der zweiten Aussparung der Deckplatte aufgenommen sein. Dies hat den Vorteil, dass der erste und/oder der zweite Bolzen die Deckplatte gegenüber der Grundplatte und dem Separatorplattenstapel in zumindest einer Richtung quer zur Stapelrichtung, sofern zumindest zwei Bolzen vorgesehen sind, in zwei zueinander orthogonalen Richtungen quer zur Stapelrichtung, fixiert.

Der erste Bolzen kann in die Deckplatte eintauchen. Der erste Bolzen kann bündig mit einer Oberseite der Deckplatte abschließen oder über die Deckplatte hinausragen. Der zweite Bolzen kann in die Deckplatte eintauchen. Der zweite Bolzen kann bündig mit einer Oberseite der Deckplatte abschließen oder über die Deckplatte hinausragen. Auf der Seite der Deckplatte weisen der erste und/oder zweite Bolzen vorzugsweise eine Verjüngung und/oder eine Einführschräge auf.

Die Grundplatte und/oder die Deckplatte umfasst typischerweise Kunststoff, beispielsweise Polypropylen, Polyethylen oder Polyamid, beispielsweise faser-oder partikelverstärkten Kunststoff. Die Grundplatte und/oder die Deckplatte kann GFK und/oder CFK umfassen. Die Grundplatte kann insbesondere ein Spritzgussteil sein. Die Deckplatte kann ebenfalls als Spritzgussteil ausgebildet sein, sie kann aber auch eine aus einem Kunststoffmaterial, beispielsweise einem extrudierten Kunststoffmaterial, ausgeschnittene Platte sein. Die Grundplatte und/oder die Deckplatte kann insbesondere antistatisch ausgerüstet sein. Ebenfalls ist es möglich, dass Teile der Grundplatte und/oder der Deckplatte oder die gesamte Grundplatte und/oder die gesamte Deckplatte aus einem metallischen Werkstoff hergestellt sind. Einlegeteile, wie Gewindeeinsätze, umfassen typischerweise Metall, beispielsweise Aluminium und/oder Stahl. Die Bolzen umfassen typischerweise Metall, beispielsweise Aluminium und/oder Stahl, insbesondere Edelstahl, und/oder Titan, das Material wird dabei vorzugsweise auf das Material der Separatorplatten abgestimmt. Die Bolzen können zusätzlich oder alternativ Kunststoff umfassen.

In einer Ausführungsform weist die Verpackungsanordnung eine flexible Folie auf. Die flexible Folie kann die Grundplatte, den Separatorplattenstapel und die Deckplatte wenigstens bereichsweise umschließen. Insbesondere umschließt die flexible Folie dabei eine Baugruppe umfassend die Grundplatte, den Separatorplattenstapel und die Deckplatte, wobei die Grundplatte und die Deckplatte unter Zwischenfassung der Separatorplatten in dieser Baugruppe bereits mittels der vorgenannten Bolzen verschraubt sind. Vorzugsweise umschließt die flexible Folie den Separatorplattenstapel und die Deckplatte vollständig. Die flexible Folie kann Löcher, insbesondere Perforationen, aufweisen. Die Folie kann vorteilhaft sein, um den Separatorplattenstapel vor Schmutz, Staub und/oder Wasser, insbesondere Spritzwasser, zu schützen. Die Folie kann wasserdicht sein, kann jedoch auch Perforationen aufweisen, durch die insbesondere Luft dringen kann.

Insbesondere kann die flexible Folie den Separatorplattenstapel in Stapelrichtung zwischen der Grundplatte und der Deckplatte einspannen. So kann beispielsweise der Deckel an dem Separatorplattenstapel in Stapelrichtung fixiert sein.

Die flexible Folie kann beispielsweise als Schrumpffolie ausgebildet sein. Perforationen in der Folie können einem Luftablass während eines Schrumpfprozesses dienen.

Ist wie zuvor genannt die Grund- und ggf. auch die Deckplatte mit über den Separatorplattenstapel auskragenden Eckbereichen ausgeführt, so kann die flexible Folie über diese Eckbereiche verspannt bzw. geschrumpft werden, so dass die Folie keinen direkten Kontakt mit den Kanten der Separatorplatten hat und so ein Abrieb vermieden werden kann.

In die flexible Folie kann ein Aufreißfaden zum Öffnen und/oder Entfernen der flexiblen Folie integriert sein. Der Aufreißfaden kann umlaufend um die Grundplatte, den Separatorplattenstapel und die Deckplatte oder lediglich bereichsweise angeordnet sein. Der Aufreißfaden kann ein Öffnen der Folie vereinfachen.

Alternativ oder zusätzlich ist es möglich, dass mindestens ein Band, beispielsweise ein Umreifungsband, insbesondere ein nicht-dehnbahres Umreifungsband, den Separatorplattenstapel in Stapelrichtung zwischen der Grundplatte und der Deckplatte einspannt. Es kann ausreichend sein, dass genau ein Umreifungsband vorgesehen ist, um lineare und rotatorische Bewegungen der Separatorplatten zu verhindern oder zumindest auf ein zulässiges Maß zu beschränken. Es können mehrere, insbesondere mindestens zwei, Umreifungsbänder vorgesehen sein. Die Umreifungsbänder können voneinander beabstandet und parallel zueinander verlaufen. Zusätzlich oder alternativ können zwei Umreifungsbänder einander kreuzen, insbesondere in einem Winkel von etwa 90°. Dazu kann ein Umreifungsband derart angeordnet sein, dass es zwei erste gegenüberliegende Kanten des Separatorplattenstapels sowie die Grundplatte und die Deckplatte umläuft, während ein zweites Umreifungsband vorgesehen ist, das derart angeordnet ist, dass es die Grundplatte und die Deckplatte sowie zwei weitere, von den ersten zwei gegenüberliegenden Kanten unterschiedliche Kanten des Separatorplattenstapels umläuft.

Eine Bandverspannung kann zur Verschmutzungsvermeidung mit einer Umhüllung des Separatorplattenstapels mittels einer Kunststofffolie, beispielsweise einer Folientüte, oder auch mit einer Umhüllung aus einer Pergamentverpackung kombiniert werden. Eine solche Umhüllung kann mittels des mindestens einen Bands befestigt werden.

Wird eine solches Umreifungsband oder werden beispielsweise zwei einander kreuzende Umreifungsbänder zum Verspannen des Separatorplattenstapels zwischen Grund- und Deckplatte verwendet, bietet es sich an, diese Umreifungsbänder auch zum Greifen der Verpackungsanordnung zu verwenden. Hierbei kann zusätzlich - beispielsweise im Bereich des Schwerpunkts der Deckplatte - mindestens eine Vertiefung in der Deckplatte vorgesehen sein, die ein Hintergreifen des Bandes, der Bänder oder des Kreuzungspunktes der Bänder erleichtert. Dies stellt eine alternative oder zusätzliche Option zu den nachfolgend noch genannten Greifmethoden dar.

In einer Ausführungsform sind die ersten und/oder die zweiten Aussparungen der Separatorplatten als von Rändern der Separatorplatten beabstandete Durchgangslöcher ausgebildet. Zusätzlich oder alternativ können die ersten und/oder die zweiten Aussparungen der Separatorplatten als Einbuchtungen, d.h. von den Rändern der Separatorplatten nach innen ausgeformte Einschnitte, ausgebildet sein.

Die Separatorplatten können jeweils einen aktiven Bereich mit Strukturen zur Medienführung entlang einer Flachseite der Separatorplatte sowie eine in sich geschlossene und den aktiven Bereich umlaufende Dichtanordnung zum Abdichten des aktiven Bereichs aufweisen. Die Strukturen zur Medienführung können weitere in sich geschlossene Dichtanordnungen aufweisen, von denen zumindest ein Teil innerhalb der vorgenannten umlaufenden Dichtanordnung angeordnet sind. In einer beispielhaften Ausführung kann eine erste Struktur zur Medienführung, insbesondere bei Separatorplatten für Brennstoffzellen, eine Struktur zur Führung eines Kühlmittels sein. Eine zweite Struktur kann eine Struktur zur Führung eines Reaktionsmittels, beispielsweise Wasserstoff sein. Eine dritte Struktur zur Medienführung kann eine Struktur zur Führung eines weiteren Mediums, beispielsweise Luft, sein. Üblicherweise sind dabei Strukturen für die Zu- und Abfuhr des jeweiligen Mediensystems vorgesehen. Die Strukturen umfassen üblicherweise jeweils mindestens eine als Durchgangsöffnung durch die Separatorplatte ausgebildete Portöffnung. Insbesondere die Struktur zur Führung von Kühlmittel kann innerhalb oder außerhalb der den aktiven Bereich umschließenden Dichtanordnung angeordnet sein. Separatorplatten für andere Anwendungen, wie beispielsweise bei Elektrolyseuren, können nur zwei Mediensysteme aufweisen und entsprechend mindestens jeweils zwei Strukturen zur Medienzufuhr und zur Medienabfuhr aufweisen. Grundsätzlich sind pro Mediensystem auch mehrere Zu- und Abfuhrstrukturen möglich. Die erste und/oder die zweite und/oder die ggf. vorhandene dritte Struktur können jeweils eine umlaufende Dichtanordnung, im Folgenden als Portabdichtung bezeichnet, umfassen. Die ersten Aussparungen und/oder die zweiten Aussparungen der Separatorplatten können jeweils außerhalb der den aktiven Bereich umlaufenden Dichtanordnung bzw. des von dieser umspannten Bereichs angeordnet sein. Dies hat den Vorteil, dass Beschädigungen im aktiven Bereich vermieden werden. Ebenso können die ersten Aussparungen und/oder die zweiten Aussparungen der Separatorplatten außerhalb der Portabdichtung bzw. des von dieser umspannten Bereichs angeordnet sein. Insbesondere kann so eine Beschädigung der Dichtanordnungen und der Kanten der Strukturen zur Medienführung vermieden werden. Insbesondere können im aktiven Bereich Erhebungen und/oder Vertiefungen gebildet sein zum Bilden von Kanälen, wenn die Separatorplatten beispielsweise in einem Brennstoffzellenstapel zusammen mit den die eigentlichen Zellen bildenden Membranelektrodeneinheiten und ggf. Diffusionsmedien übereinander gestapelt sind. Eine solche Anordnung der ersten und ggf. zweiten Ausnehmung außerhalb des von mindestens einer Dichtanordnung umgebenen Bereichs der Separatorplatte hat zur Folge, dass die Kanten der Ausnehmung im Brennstoffzellenstapel in solchen Bereichen liegen, die vom Verstärkungsrand der Membranelektrodeneinheit überdeckt werden, so dass auch eine mögliche Verbiegung dieser Kanten nicht zu einem Kurzschluss durch Kontakt der einander benachbarten Separatorplatten führt, da der Verstärkungsrand in diesem Bereich als Isolierung zwischen den Separatorplatten liegt.

Die jeweiligen Dichtanordnungen können metallische Sickendichtungen und/oder Elastomer umfassen.

Die oben beschriebenen Trennelemente zwischen den Separatorplatten des Separatorplattenstapels können ebenfalls einer Beschädigung der Dichtungen entgegenwirken, da die Dichtungen der gestapelten Separatorplatten durch die zwischen den Separatorplatten angeordneten Trennelemente nicht oder nur unwesentlich aneinanderhaften.

In einer vorteilhaften Ausführungsform weist die Grundplatte wenigstens eine Durchgangsöffnung auf. Die Durchgangsöffnung kann derart angeordnet sein, dass eine Projektion der Durchgangsöffnung auf die Separatorplatten entlang der Stapelrichtung wenigstens bereichsweise mit den aktiven Bereichen der Separatorplatten zusammenfällt. Vorteilhafterweise ist die mindestens eine Durchgangsöffnung so angeordnet, dass diese in einer Projektion auf die Separatorplatten nicht mit einem der vorgenannten Ports zusammenfällt. So können die Portkanten durch die Grundplatte vor Verformung geschützt sein. Die wenigstens eine Durchgangsöffnung kann insbesondere derart ausgebildet sein, dass eine Hebe- und Senkvorrichtung durch die wenigstens eine Durchgangsöffnung der Grundplatte hindurchgreifen kann, um die Separatorplatten bzw. den Separatorplattenstapel zu heben und zu senken, so dass beispielsweise beim Aufstapeln der Separatorplatten auf die Grundplatte eine neu hinzukommende Separatorplatte immer auf derselben Höhe relativ zur Grundplatte aufgelegt werden kann bzw. beim Abstapeln der Separatorplatten diese immer auf derselben Höhe entnommen werden können. Vorteilhafterweise ist die mindestens eine Durchgangsöffnung im Wesentlichen mittig zur Fläche der Separatorplatten angeordnet. Eine besonders vorteilhafte Ausführung sieht zwei Durchgangsöffnungen vor, so dass ein dazwischen liegender Steg die Grundplatte stabilisiert. Die Hebe- und Senkvorrichtung kann beispielsweise zwei in Stapelrichtung ausfahrbare Zylinder aufweisen. Vorzugsweise wird beim Aufstapeln der Separatorplatten ein direkter Kontakt zwischen der zuunterst angeordneten Separatorplatte und der Hebe- und Senkvorrichtung vermieden, beispielsweise indem ein Trennelement, wie es ansonsten zwischen den einzelnen Separatorplatten eingefügt wird, auch auf die Grundplatte aufgelegt wird.

Betrachtet man das Verhältnis der mindestens einen, vorzugsweise zwei Durchgangsöffnungen in der Grundplatte zum massiven Teil der Grundplatte, so kann dieses mindestens 40% und/oder mindestens 45% und/oder höchstens 55% und/oder höchstens 50% betragen. Ausgedrückt als Anteil der mindestens einen, vorzugsweise zwei Durchgangsöffnungen in der Grundplatte an deren Gesamtfläche einschließlich der Durchgangsöffnung(en) ist ein Bereich von mindestens 20%, vorzugsweise mindestens 25% und/oder höchstens 50%, vorzugsweise höchstens 45% vorteilhaft.

In einer Ausführungsform der Verpackungsanordnung ragt die Grundplatte entlang einer ersten Richtung senkrecht zur Stapelrichtung an einander gegenüberliegenden Enden des Separatorplattenstapels wenigstens bereichsweise über den Separatorplattenstapel hinaus. Alternativ oder zusätzlich kann die Grundplatte entlang einer zweiten Richtung senkrecht zur Stapelrichtung und senkrecht zur ersten Richtung an einander gegenüberliegenden Enden des Separatorplattenstapels wenigstens bereichsweise über den Separatorplattenstapel hinausragen. Dies kann unter anderem den Vorteil haben, dass der Separatorplattenstapel besser vor mechanischen Beschädigungen geschützt ist.

Die Gesamtfläche der Grundplatte - einschließlich der Durchgangsöffnung(en) kann beispielsweise mindestens 115% und/oder mindestens 120%und/oder höchstens 150% und/oder höchstens 140% der Gesamtfläche einer Separatorplatte des Separatorplattenstapels betragen.

In einer Ausführungsform der Verpackungsanordnung kann die Grundplatte in zweien der an einander gegenüberliegenden Enden des Separatorplattenstapels über den Separatorplattenstapel hinausragenden Bereiche jeweils einen Griff oder eine Struktur zum Aufnehmen eines Greifwerkzeugs aufweisen. Dies kann einen Transport vereinfachen. Insbesondere kann die Verpackungsanordnung derart automatisiert heb- bzw. senkbar sein. Während die vorgenannte Heb- und Senkvorrichtung dem Heben und Senken einzelner Separatorplatten bzw. des aus ihnen gebildeten Separatorplattenstapels relativ zur Grundplatte dient, dient ein solches Greifzeug also insbesondere dem Heben und Senken der gesamten Verpackungsanordnung.

Alternativ ist es jedoch, insbesondere bei Verwendung einer geeigneten Folie, auch möglich, die Verpackungsanordnung mittels eines Vakuumgreifers an der Folie im Bereich der Deckplatte anzusaugen und so anzuheben. Daneben sei auf die vorgenannte Greifmöglichkeit mithilfe von Umreifungsbändern verwiesen.

In einer Ausführungsform der Verpackungsanordnung kann die Grundplatte in zweien der an einander gegenüberliegenden Enden des Separatorplattenstapels über den Separatorplattenstapel hinausragenden Bereiche jeweils eine Einbuchtung umfassen, sodass die Grundplatte in diesen Bereichen über den Separatorplattenstapel hinausragt, jedoch eine geringere Breite als in den Eckbereichen aufweist. Beispielsweise kann die Grundplatte eine Knochenform aufweisen. Dies kann den Vorteil haben, dass bspw. ein Greifwerkzeug die Verpackungsanordnung greifen kann, ohne dabei die Separatorplatten zu berühren. So kann eine Beschädigung des Separatorplattenstapels durch das Greifwerkzeug vermieden werden.

In einer Ausführung der Verpackungsanordnung sind die Separatorplatten aus Metallblechen mit einer Blechstärke von höchstens 0,5 mm, vorzugsweise höchstens 0,2 mm, vorzugsweise höchstens 0,1 mm, vorzugsweise höchstens 0,09 mm, vorzugsweise höchstens 0,08 mm, vorzugsweise höchstens 0,085 mm, vorzugsweise höchstens 0,075 mm, vorzugsweise höchstens 0,07 mm, vorzugsweise höchstens 0,06 mm, und insbesondere höchstens 0,05 mm gebildet. Dabei kann es sich insbesondere um einlagige Separatorplatten mit dieser Blechstärke handeln oder alternativ um zwei- oder dreilagige Separatorplatten, bei denen eine einzelne Lage eine solche Blechstärke aufweist.

Die vorliegende Offenbarung betrifft ferner ein Verpackungssystem, mit einem Kleinlastträger und mit wenigstens zwei Verpackungsanordnungen nach obiger Beschreibung. Die zwei Verpackungsanordnungen sind in dem Kleinlastträger aufgenommen, wobei der Kleinlastträger und die Grundplatten der Verpackungsanordnungen derart dimensioniert sind, dass die Grundplatten nebeneinander formschlüssig oder im Wesentlichen formschlüssig im Kleinlastträger aufgenommen sind. Dies hat den Vorteil, dass ein Verrutschen der Verpackungsanordnungen in dem Kleinlastträger vermieden oder zumindest vermindert werden kann. Hierdurch kann auf zusätzliches Füllmaterial verzichtet werden. Vorliegend werden die Begriffe Kleinlastträger und Kleinladungsträger synonym verwendet. Unter Kleinladungsträger bzw. Kleinlastträger kann insbesondere eine vom Verband der Automobilindustrie (VDA) standardisierte Transport- und Lagerkiste gemäß VDA Empfehlung 4500: Kleinladungsträger (KLT)-System verstanden werden.

Der Kleinladungsträger umfasst Kunststoff, insbesondere Polypropylen. Vorzugsweise ist der Kleinladungsträger aus Kunststoff, insbesondere Polypropylen gebildet. Die Kleinladungsträger können jedoch auch Pappe umfassen oder aus Pappe gebildet sein. Die Kleinladungsträger können einen Deckel umfassen, können jedoch auch einfoliert werden oder durch Aufstapelung verschlossen werden. Verschlossene KLTs sind insbesondere dann vorteilhaft, wenn eine Bandverspannung verwendet wird und auf eine Folienverpackung der Verpackungsanordnungen verzichtet wird.

In einer Ausführung können die Aussparungen zur Aufnahme der Bolzen in der Grundplatte und ggf. der Deckplatte nicht punktsymmetrisch angeordnet sein. Dies kann vorteilhaft zur Aufnahme einer optimierten Anzahl Verpackungsanordnungen in einem KLT bei gleichzeitiger Einhaltung eventuell pro Verpackungsanordnung vorgegebener Gewichtsobergrenzen oder vorgegebener Obergrenzen an in dieser Verpackungsanordnung angeordneten Separatorplatten sein. Die der Grundplatte abgewandten Enden der Bolzen können über die Deckplatte oder den Separatorplattenstapel überstehen. Die Unterseite der Grundplatte kann eine korrespondierende Ausnehmung aufweisen. Dies kann eine Aufnahme dieses Überstands in der Ausnehmung auf der Unterseite einer auf dem ersten Separatorplattenstapel oder der Verpackungsanordnung angeordneten weiteren Grundplatte bzw. einer dort angeordneten weiteren Verpackungsanordnung ermöglichen. Dies kann zu einer verbesserten Stapelbarkeit und/oder verringerten Platzproblemen führen. Beispielsweise kann die Verrippung auf der Unterseite der Grundplatte so ausgebildet sein, dass eine Bolzen-Spitze aufgenommen werden kann. Bei - abgesehen von der Anordnung der Aussparungen zur Aufnahme der Bolzen - punktsymmetrischer Ausbildung der Grundplatte und der Deckplatte ermöglicht es diese Anordnung, die Verpackungsanordnungen unter Verwendung von Gleichteilen für die Grund- und Deckplatte alternierend um 180° gedreht anzuordnen ohne hierfür mehr Raum in Stapelrichtung zu benötigen.

Die vorliegende Offenbarung betrifft ferner ein Verfahren zum Verpacken von Separatorplatten für ein elektrochemisches System, insbesondere zum Verpacken zu einer oben beschriebenen Verpackungsanordnung. Das vorgeschlagene Verfahren umfasst die Schritte:
- Stapeln einer Vielzahl von Separatorplatten für ein elektrochemisches System auf einer Grundplatte derart, dass wenigstens ein an der Grundplatte befestigter Bolzen in entlang einer Stapelrichtung fluchtenden ersten Aussparung der gestapelten Separatorplatten aufgenommen wird/ist.

Das Stapeln der Separatorplatten auf der Grundplatte kann ein Stapeln der Separatorplatten auf einer durch eine Durchgangsöffnung der Grundplatte hindurchgreifenden und entlang der Stapelrichtung verfahrbaren Hebe- und Senkvorrichtung und ein Absenken der Hebe- und Senkvorrichtung umfassen.

Ferner kann das Verfahren umfassen:
- Anordnen einer Deckplatte auf dem Separatorplattenstapel, so dass der Separatorplattenstapel entlang der Stapelrichtung zwischen der Grundplatte und der Deckplatte vorzugsweise mittels Bolzen befestigt angeordnet ist, und Umschließen oder Umlaufen der Grundplatte, des Separatorplattenstapels und der Deckplatte mit einer flexiblen Folie oder mindestens eines Bandes, die bzw. das den Separatorplattenstapel zwischen der Grundplatte und der Deckplatte umhüllt.

Die oben bezüglich der Verpackungsanordnung oder des Verpackungssystems beschriebenen Merkmale können analog auf das Verfahren angewandt werden.

Beispielhafte Ausführungen der Erfindung werden anhand der beigefügten Figuren und der nachfolgenden Figurenbeschreibung veranschaulicht und näher erläutert. Die beschriebenen und in den Figuren gezeigten Merkmalskombinationen sind lediglich exemplarischer Natur und sind nicht einschränkend zu verstehen.

Es zeigen
- Fig. 1: eine Draufsicht auf eine Separatorplatte für ein elektrochemisches System,
- Fig. 2A: eine perspektivische Ansicht einer Grundplatte mit einem eingeschraubten ersten und einem eingeschraubten zweiten Bolzen
- Fig. 2B: eine Schnittansicht eines Ausschnitts der Grundplatte der Figur 2A im Bereich des ersten eingeschraubten Bolzens,
- Fig. 3A: eine perspektivische Ansicht der Grundplatte mit den eingeschraubten Bolzen gemäß Figur 2A, wobei zusätzlich eine Deckplatte auf den Bolzen angeordnet ist,
- Fig. 3B: eine perspektivische Ansicht der bereits in Fig. 3A gezeigten Grundplatte mit den eingeschraubten Bolzen mit der Deckplatte aus einer weiteren Perspektive,
- Fig. 4A: eine perspektivische Ansicht einer Verpackungsanordnung, umfassend die Grundplatte mit eingeschraubten Bolzen und Deckplatte der vorherigen Figuren sowie einen zwischen der Deckplatte und der Grundplatte angeordneten Separatorplattenstapel,
- Fig. 4B: eine Seitenansicht der Verpackungsanordnung gemäß Fig. 4A ferner aufweisend eine Folie,
- Fig. 4C: eine Seitenansicht der Verpackungsanordnung gemäß Fig. 4A ferner aufweisend zwei Bänder,
- Fig. 5A: eine Unteransicht der Verpackungsanordnung gemäß Fign. 4A bzw. 4B,
- Fig. 5B: eine Unteransicht einer alternativen Ausführung einer Grundplatte, die anstelle der Grundplatte der vorherigen Figuren in der Verpackungsanordnung der Figuren 4A, 4B und 4C vorgesehen sein kann,
- Fig. 6: eine Seitenansicht einer Stapelvorrichtung und
- Fig. 7: eine Draufsicht auf einen Kleinlastträger mit zwei aufgenommenen Verpackungsanordnungen gemäß der Figur 4B
- Fig. 8A: eine perspektivische Ansicht einer zusammengesetzten Baugruppe umfassend Grundplatte mit eingeschraubten Bolzen und Deckplatte gemäß Figur 3A, wobei zusätzlich eine weitere derartige Baugruppe aufgestapelt ist,
- Fig. 8B: eine Schnittansicht durch die Figur 8A, wobei der Schnitt in einer Ebene parallel zur xz-Ebene verläuft.

Wiederkehrende Merkmale werden in den Figuren mit denselben Bezugszeichen versehen.

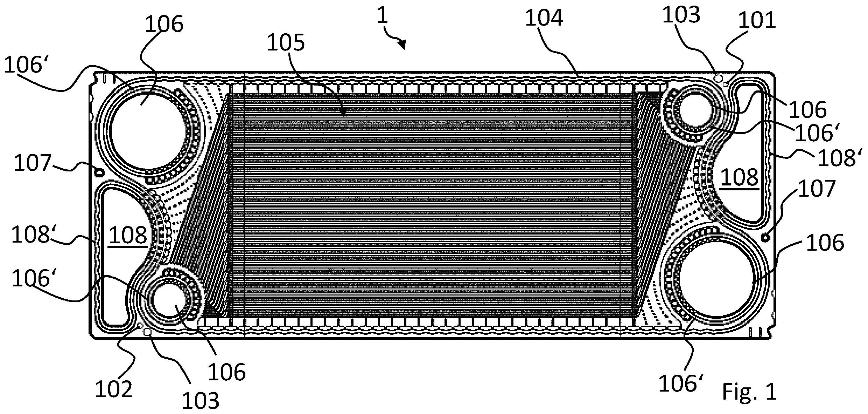

Fig. 1 zeigt in einer Draufsicht eine Separatorplatte 1 für ein elektrochemisches System, insbesondere für eine Brennstoffzelle. Die Separatorplatte 1 ist vorliegend aus Metallblech mit einer Blechstärke von 0,075mm gebildet. Die Separatorplatte 1 weist eine Aussparung 101 zum Aufnehmen eines ersten Bolzens auf. Ferner weist die Separatorplatte 1 eine Aussparung 102 zum Aufnehmen eines zweiten Bolzens auf. In der Brennstoffzelle werden Separatorplatten gemäß Figur 1 übereinander gestapelt, wobei zwischen den Separatorplatten eine Membranelektrodeneinheit (MEA) angeordnet ist. Die Aussparungen 101 und 102 sind derart angeordnet, dass sie in der Brennstoffzelle von einem meist aus polymerbasiertem Folienmaterial bestehenden MEA-Verstärkungsrand zumindest teilweise überdeckt sind. Die Separatorplatte 1 weist ferner zwei Ausnehmungen 103 auf, die zum Stapeln der Brennstoffzelle dienen, d.h. zum alternierenden Aufstapeln von Separatorplatten 1 und hier nicht dargestellten MEAs. Die Ausnehmungen 103 sind in der Brennstoffzelle nicht oder zumindest nicht komplett von dem MEA-Verstärkungsrand überdeckt. Die Separatorplatte 1 hat einen aktiven Bereich 105, der von einer umlaufenden und in sich geschlossenen Dichtanordnung 104 begrenzt ist. In dem von der Dichtanordnung 104 begrenzten Bereich sind zusätzlich zum aktiven Bereich 105 und weiteren fluidführenden Bereichen auch Ausnehmungen 106 angeordnet, die zur Medienführung dienen. Die Ausnehmungen 106 weisen jeweils eine weitere um die jeweilige Ausnehmung 106 verlaufende, in sich geschlossene Dichtanordnung 106' auf. Die Aussparungen 101 und 102 sowie die Ausnehmungen 103 sind außerhalb des von der Dichtanordnung 104 umgebenen Bereichs und damit auch außerhalb des aktiven Bereichs angeordnet. Auf der Separatorplatte sind zudem Prägungen 107 zum Positionieren der Separatorplatten zueinander, beispielsweise für einen Schweiß- oder sonstigen Verbindungsprozess, vorgesehen. Die Ausnehmungen 108 dienen der Kühlmittelzu- und abfuhr und sind außerhalb der Dichtanordnung 104 jeweils von einer eigenen Dichtanordnung 108' umgeben.

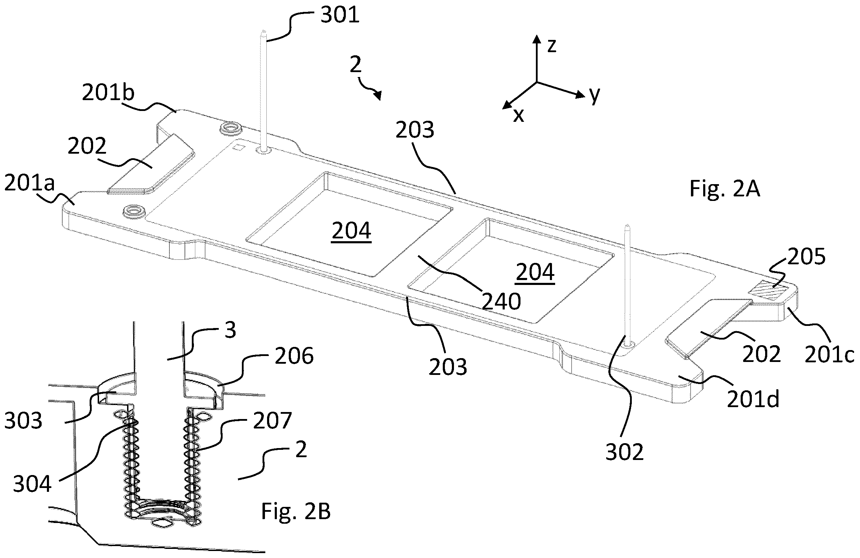

Fig. 2A zeigt eine perspektivische Ansicht einer Grundplatte 2 mit zwei eingeschraubten Bolzen 3. Die Grundplatte 2 ist aus Kunststoff, umfasst insbesondere Polypropylen. Die eingeschraubten Bolzen 3 umfassen einen ersten Bolzen 301 und einen zweiten Bolzen 302. Die Bolzen 301, 302 erstrecken sich quer zu einer Oberfläche der Grundplatte 2 in z-Richtung, während sich die Oberfläche der Grundplatte in der xy-Ebene erstreckt. Der erste Bolzen 301 und der zweite Bolzen 302 haben einen runden Querschnitt. Der erste Bolzen 301 und der zweite Bolzen 302 weisen an ihren oberen Enden jeweils einen sich nach oben verjüngenden Querschnitt auf. Die Grundplatte 2 ist derart ausgebildet, dass sie über eine auf der Grundplatte gestapelte Separatorplatte, die gemäß der Separatorplatte 1 der Fig. 1 ausgebildet ist, hinausragen. Ist die Separatorplatte 1 auf der Grundplatte 2 gestapelt, so ragt der erste Bolzen 301 durch die erste Aussparung 101 der Separatorplatte und der zweite Bolzen 302 ragt durch die zweite Aussparung 102. Die Grundplatte 2 weist an ihren beiden Längsenden jeweils einen Griff 202 auf, der gegenüber Eckbereichen 201a und 201b bzw. Eckbereichen 201c und 201d der Grundplatte nach innen versetzt ist. So können die Griffe 202 hintergriffen werden, wenn die Grundplatte bzw. die die Grundplatte enthaltende Verpackungsanordnung in einem Kleinladungsträger (KLT) angeordnet ist, auch wenn die Eckbereiche 201a bis 201d an einer Wandung des KLT anliegen. Auch in der Längsrichtung (y-Richtung) hat die Grundplatte 2 einander gegenüberliegende nach innen springende Bereiche 203. Die Bereiche 203 ragen über einen aus einer Vielzahl von gemäß Figur 1 ausgebildeten Separatorplatten 1 gebildeten Separatorplattenstapel hinaus. Die Bereiche 203 sind jedoch gegenüber Au-ßenkanten der Eckbereiche 201a und 201d bzw. 201b und 201c nach innen zurückgesetzt. Die Grundplatte 2 weist zwei zentrale, im wesentlichen quadratische Öffnungen 204 auf, durch die eine Hebe- und Senkvorrichtung ragen kann, um die Separatorplatten 1 auf der Grundplatte zu stapeln bzw. diese von der Grundplatte bzw. der jeweils darunterliegenden Separatorplatte 1 abzustapeln. Die beiden Öffnungen 204 sind durch einen Steg 240 voneinander getrennt. Vorteilhafterweise sind die Öffnungen 204 so angeordnet, dass diese in einer Projektion auf die Separatorplatten 1 nicht mit in den Separatorplatten vorgesehenen Durchgangsöffnungen, insbesondere nicht mit Ports zur Medienführung, zusammenfallen. So können die Portkanten durch die Grundplatte vor Verformung geschützt sein. Ferner ist in dem Eckbereich 201c auf der Oberfläche der Grundplatte eine Codierung 205, beispielsweise in Form eines QR-Codes, zur Speicherung von zugehörigen Daten und/oder zur Identifizierung von aufgestapelten Separatorplatten aufgebracht.

Die Verwendung von genau zwei Bolzen 301 und 302 ist vorteilhaft, da derart eine Fixierung erreicht werden kann, in der sowohl translatorische Bewegungen der Separatorplatten quer zur Stapelrichtung sowie eine Rotation der Separatorplatten um eine parallel zur Stapelrichtung verlaufende Gerade gesperrt sind. Die Verwendung von mehr als zwei Bolzen ist nicht ausgeschlossen, kann jedoch nachteilig sein, da dies zu einer statischen Überbestimmtheit führen kann und damit zu Spannungen in den aufgestapelten Separatorplatten bzw. der Grundplatte 2 und/oder der Deckplatte 4.

Betrachtet man das Verhältnis der zwei Durchgangsöffnungen 204 in der Grundplatte zum massiven Teil der Grundplatte 2, so kann dieses mindestens 40% und/oder mindestens 45% und/oder höchstens 55% und/oder höchstens 50% betragen, vorliegend ist dies 48 %. Ausgedrückt als Anteil der mindestens zwei Durchgangsöffnungen 204 in der Grundplatte 2 an deren Gesamtfläche einschließlich der Durchgangsöffnungen 204 ist ein Bereich von mindestens 20%, vorzugsweise mindestens 25% und/oder höchstens 50%, vorzugsweise höchstens 45% vorteilhaft.

Figur 2B zeigt i n einer Schnittansicht einen Ausschnitt der Grundplatte 2 der Figur 2A mit eingeschraubtem Bolzen 3. Die Grundplatte 2 umfasst für jeden Bolzen eine einstufige Bohrung 206. Die Bohrung 206 ist eine Sackbohrung. Der untere Teil der Bohrung 206 bildet ein Innengewinde 207 aus. Der Bolzen 3 weist an seinem unteren Ende ein Außengewinde 304 auf. Am oberen Ende des Außengewindes 304 ist ein Kragen 303 ausgebildet. Das Außengewinde 304 ist in das Innengewinde 207 eingeschraubt.

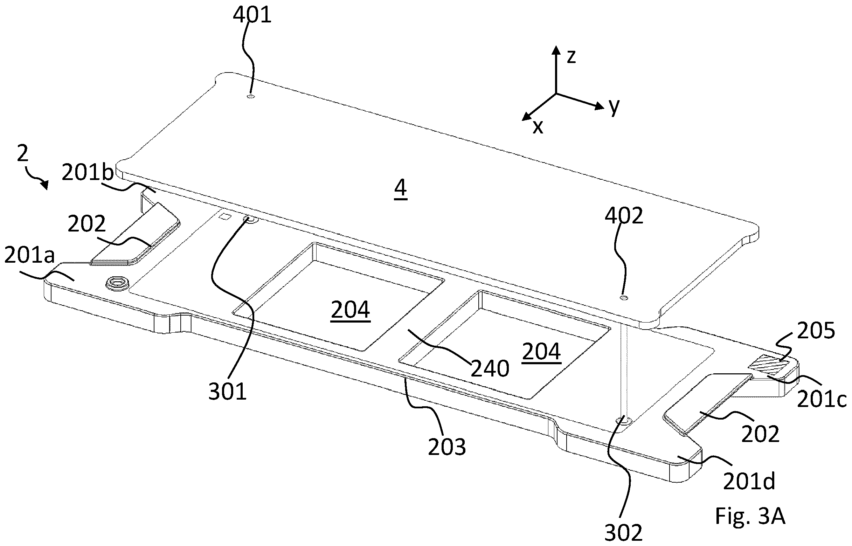

Figur 3A zeigt die Grundplatte 2 mit eingeschraubten Bolzen 3 der Figur 2A mit zusätzlich aufgesetzter Deckplatte 4. Die Deckplatte ist ein Spritzgussteil und aus Polypropylen. Die Deckplatte 4 weist eine erste Ausnehmung 401 und eine zweite Ausnehmung 402 auf. Der Durchmesser der ersten Ausnehmung 401 korrespondiert mit dem Durchmesser des ersten Bolzens 301. Der Durchmesser der zweiten Ausnehmung 402 korrespondiert mit dem Durchmesser des zweiten Bolzens 302. Ein oberes Ende des ersten Bolzens 301 ragt in die erste Ausnehmung 401 und ein oberes Ende des zweiten Bolzens 302 ragt in die zweite Ausnehmung 402, sodass der Deckel in x- sowie in y-Richtung gegenüber der Grundplatte fixiert ist.

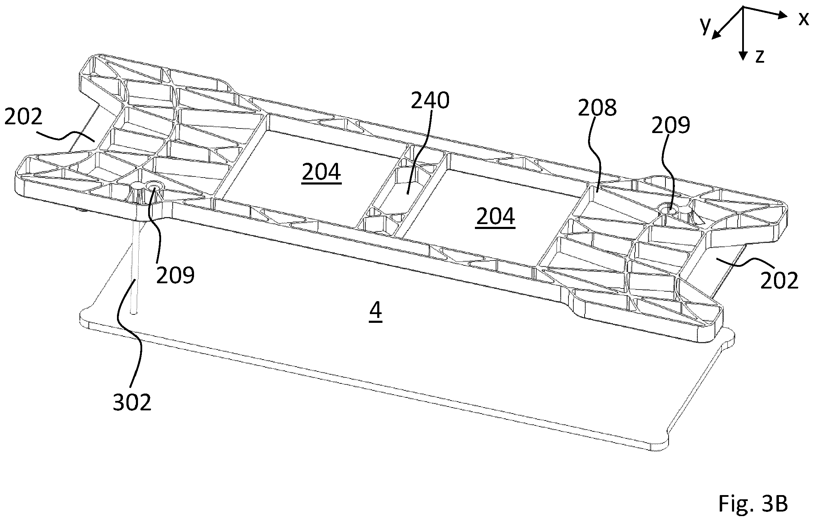

Figur 3B zeigt die Grundplatte 2 mit eingeschraubten Bolzen 3 und Deckplatte 4 in einer weiteren perspektivischen Ansicht von unten. Die Grundplatte 2 ist von unten hohl gestaltet und weist Versteifungsrippen 208 auf. Ferner sind neben den Bohrlöchern 206 zum Aufnehmen der Bolzen 3 Orientierungslöcher 209 angeordnet. Anhand der Orientierungslöcher 209 kann die Grundplatte in einer Maschine, beispielsweise in einer Hebe- und Senkvorrichtung, automatisiert ausgerichtet werden.

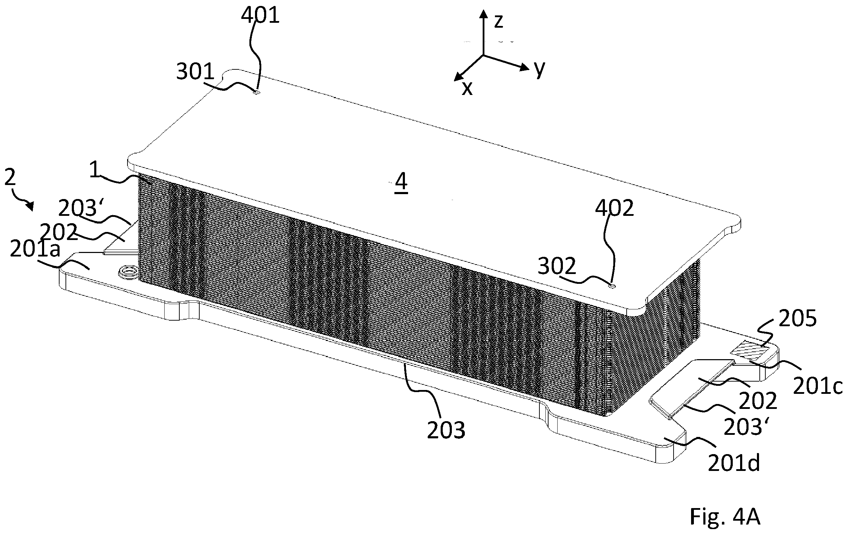

Figur 4A zeigt eine Verpackungsanordnung gemäß Figur 3A bzw. 3B in Form der Grundplatte 2 mit eingeschraubten Bolzen 3 und Deckplatte 4 mit einer Vielzahl, vorliegend 75, von Separatorplatten 1. Die Separatorplatten 1 entsprechen der der Figur 1. Die Separatorplatten 1 sind zwischen der Grundplatte 2 und der Deckplatte 4 zu einem Separatorplattenstapel gestapelt. Die Deckplatte 4 überragt den Separatorplattenstapel in Breitenrichtung (x-Richtung) sowie Längsrichtung (y-Richtung) beidseitig. Die Grundplatte 2 überragt den Separatorplattenstapel in Breitenrichtung (x-Richtung) sowie Längsrichtung (y-Richtung) beidseitig. Eine Länge, d.h. eine Ausdehnung in y-Richtung, der Deckplatte 4 entspricht der Länge der Grundplatte 2 im Bereich 203' oder ist geringfügig geringer. Ein Greifwerkzeug kann so die in Fig. 4A gezeigte Anordnung greifen ohne die Separatorplatten 1 zu berühren. Die Bolzen 301 und 302 ragen durch die Aussparungen 101 und 102 und fixieren die Separatorplatten 1 gegenüber der Grundplatte 2 in x- und y-Richtung. Die oberen Enden der Bolzen 301 und 302 tauchen in die jeweilige Aussparung 401 bzw. 402 der Deckplatte 4 ein. Die Deckplatte 4 ist dadurch ebenfalls in x- und y-Richtung gegenüber der Grundplatte 2 fixiert.

Die Gesamtfläche der Grundplatte 2 - einschließlich der Durchgangsöffnungen 204 kann mindestens 115% und/oder mindestens 120%und/oder höchstens 150% und/oder höchstens 140% der Gesamtfläche einer Separatorplatte 1 des Separatorplattenstapels betragen. Im gezeigten Beispiel beträgt die Gesamtfläche der Grundplatte 2 136 % der Gesamtfläche einer Separatorplatte 1 des Separatorplattenstapels.

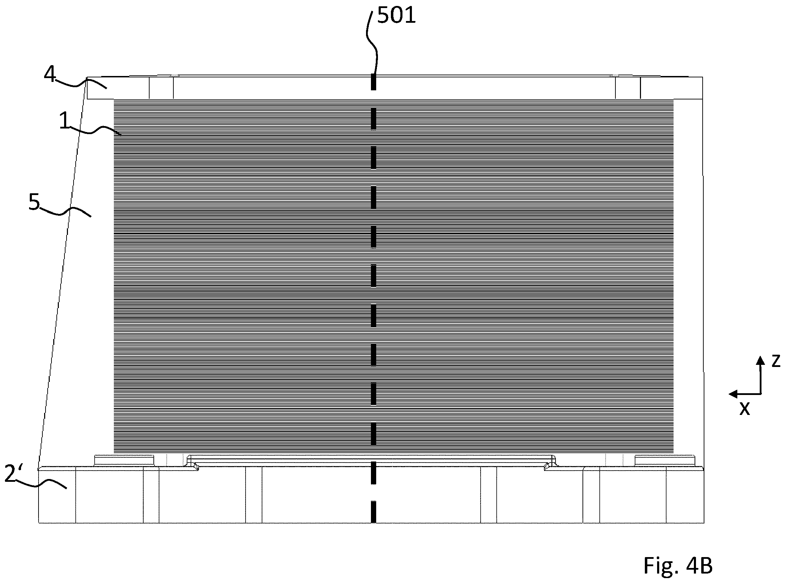

Figur 4B zeigt die in Figur 4A gezeigte Verpackungsanordnung mit einer Folie 5. Die Folie 5 ist als Schrumpffolie ausgebildet und verspannt die Separatorplatten 1 zwischen der Grundplatte 2 und der Deckplatte 4 in z-Richtung. Die Folie 5 kann die Grundplatte 2, die Deckplatte 4 und die dazwischen angeordneten Separatorplatten 1 lediglich umschließen, um einen Schutz vor Schmutz oder Wasser zu bieten. Ein Aufreißfaden 501 ist in der Folie zum Öffnen dieser vorgesehen. Die in Figur 4B gezeigte Grundplatte 2' unterscheidet sich durch eine asymmetrische Ausbildung von der Grundplatte 2 der vorherigen Figuren, indem links des Aufreißfadens 501 die Grundplatte 2' in x-Richtung länger ausgebildet ist als rechts des Aufreißfadens 501.

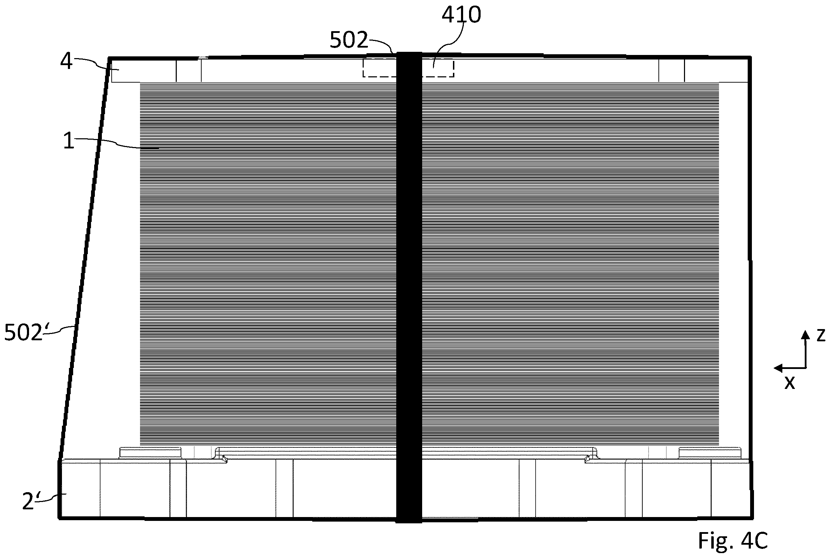

Figur 4C zeigt eine Variante zur in Figur 4B dargestellten Verpackungsanordnung mit zwei Bändern 502, 502', die eine Umreifung der Verpackungsanordnung ausbilden und die Separatorplatten 1 zwischen der Grundplatte 2 und der Deckplatte 4 in z-Richtung verspannen. Es kann ausreichend sein, dass genau ein Umreifungsband 502 oder 502' vorgesehen ist, um lineare und rotatorische Bewegungen der Separatorplatten zu verhindern oder zumindest auf ein zulässiges Maß zu beschränken. Nicht dargestellt ist in Figur 4C eine optional vorhandene Folie oder sonstige Schutzverpackung, die den Separatorplattenstapel gegen Verschmutzung schützt und ebenfalls von einem oder von beiden der Bänder 502, 502' festgehalten werden kann. Die Deckplatte 4 weist im vorliegenden Ausführungsbeispiel eine mittig angeordnete Vertiefung 410 auf, die ein Greifen der Verpackungsanordnung, beispielsweise am Schwerpunkt oder am Kreuzungspunkt der Bänder 502, 502' als alternative Greifmethode zum Greifen an den Seitenrändern der Grundplatte 2 ermöglicht.

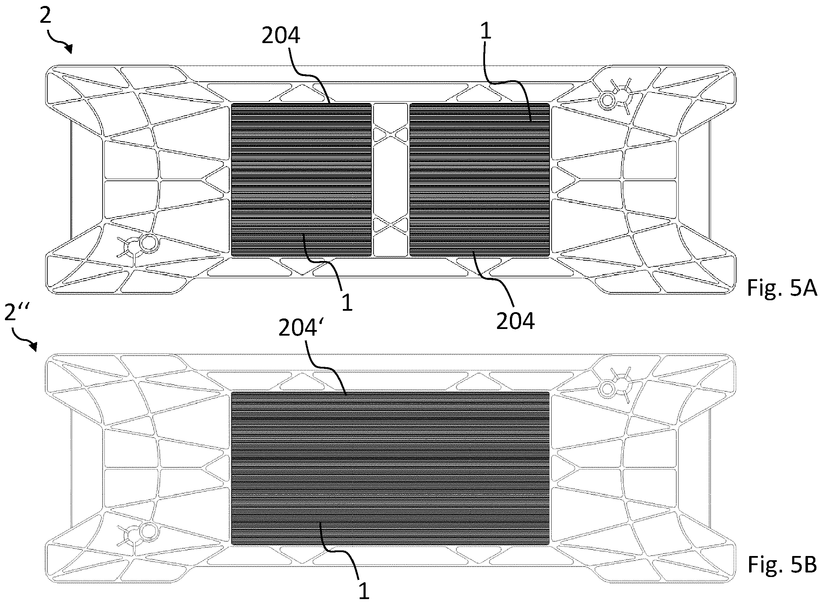

Figur 5A zeigt die Verpackungsanordnung der Figur 4A in einer Unteransicht. Durch die Öffnungen 204 ist der aktive Bereich der zuunterst aufgestapelten Separatorplatte 1 erkennbar. Figur 5B zeigt die Verpackungsanordnung der Figur 4A in einer Unteransicht mit einer alternativ ausgeführten Grundplatte 2". Die Grundplatte 2" weist anstelle zweier kleinerer eine große Öffnung 204' zum Aufnehmen einer Hebe- und -Senkvorrichtung auf. Durch die Öffnung 204' ist der aktive Bereich der zuunterst aufgestapelten Separatorplatte 1 erkennbar. Im realen Betrieb ist es jedoch bevorzugt, wenn zwischen der Grundplatte 2 und der untersten Separatorplatte 1 des Separatorplattenstapels ein Trennelement, beispielsweise ein Trennpapier, angeordnet wird. Die Trennelemente dienen nur der Trennung der Separatorplatten. Vorzugsweise nicht als Trennelemente zu verstehen sind Membranelektrodenanordnungen oder andere Elemente, die in einem funktionsfähigen Brennstoffzellstapel zwischen den Separatorplatten angeordnet werden. Analoges gilt für entsprechende funktionale Bauteile anderer elektrochemischer Systeme.

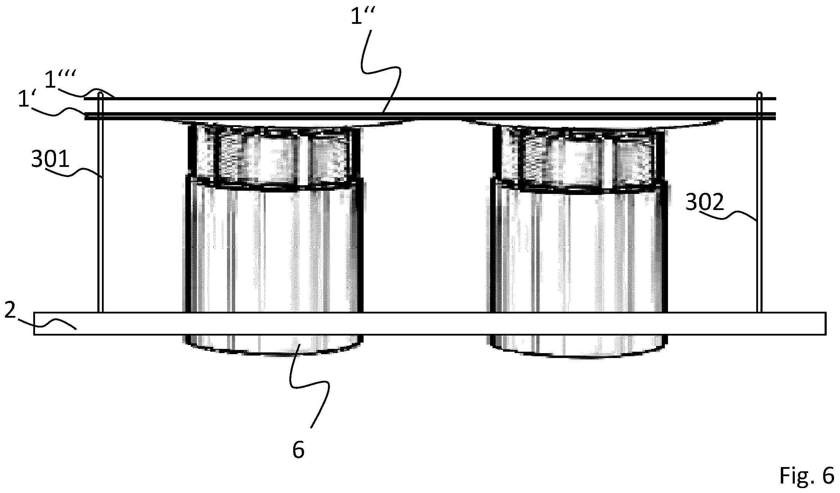

Figur 6 zeigt einen Zeitpunkt in einem Stapelprozess, in dem eine dritte Separatorplatte 1‴ auf eine Grundplatte 2 aufgestapelt wird. Eine erste Separatorplatte 1' und eine zweite Separatorplatte 1" sind bereits aufgestapelt. Eine Hebe- und Senkvorrichtung 6 ragt in Form von zwei Hydraulikzylindern durch die Öffnungen 204 der Grundplatte 2 gemäß einer der vorherigen Figuren. Die Separatorplatten 1, die Grundplatte 2, die Bolzen 301 und 302 sind ausgebildet wie bezüglich der vorherigen Figuren beschrieben. Nach der Aufnahme einer weiteren Separatorplatte 1 senkt sich die Hebe- und Senkvorrichtung, sodass eine weitere Separatorplatte auf gleichbleibender Höhe der Verpackungsanordnung aufgenommen werden kann. Sukzessive werden derart automatisiert eine Vielzahl von Separatorplatten 1 übereinander auf die Grundplatte 2 gestapelt. Zwischen den Separatorplatten kann jeweils ein Trennelement angeordnet werden. Das Trennelement ist dabei bevorzugt ein Pergamentpapier. Die Trennelemente dienen dabei nur der Trennung der Separatorplatten. Vorzugsweise nicht als Trennelemente zu verstehen sind Membranelektrodenanordnungen oder andere Elemente, die in einem funktionsfähigen Brennstoffzellstapel oder Stapel eines sonstigen elektrochemischen Systems zwischen den Separatorplatten angeordnet werden. Nach dem Aufstapeln der letzten Separatorplatte des derart gebildeten Separatorplattenstapels wird die Deckplatte 4 gemäß obiger Figuren aufgestapelt. Daraufhin wird die derart gebildete Verpackungsanordnung mit einer Folie 5 eingeschlagen und diese wird geschrumpft, sodass die Folie 5 den Separatorplattenstapel zwischen der Grundplatte 2 und der Deckplatte 4 verspannt.

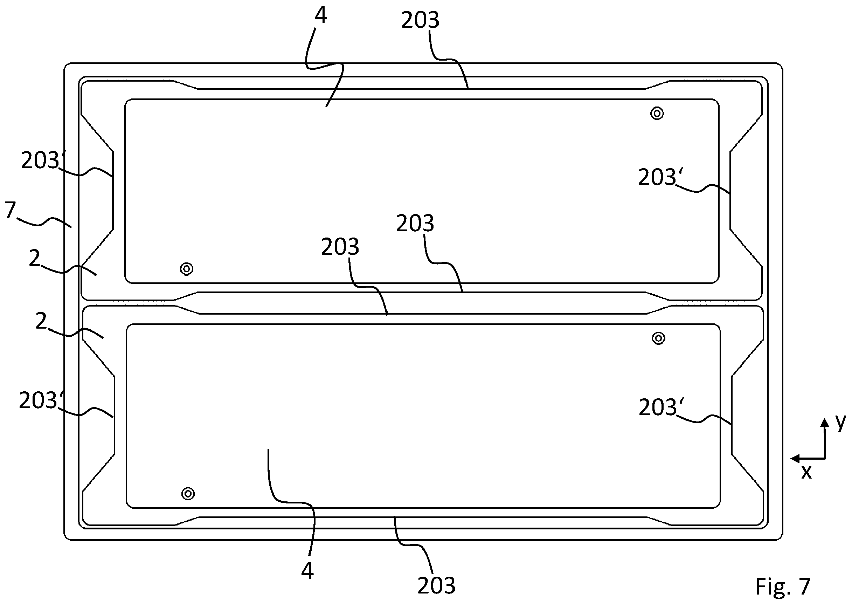

Figur 7 zeigt in einer Draufsicht zwei Verpackungsanordnungen gemäß den vorherigen Figuren, die nebeneinander in einem Kleinlastträger 7 angeordnet sind. Die Grundplatten 2 der Verpackungsanordnungen sind derart dimensioniert, dass sie formschlüssig im Kleinlastträger 7 aufgenommen sind. Gegenüberliegende rückspringende Bereiche 203 bzw. 203' der Grundplatten 2 liegen nicht an den Seitenwänden des KLT 7 an, sodass die Verpackungsanordnung automatisiert mit einem Greifwerkzeug aus dem KLT entnommen werden kann. Die Verpackungsanordnungen können unmittelbar mittels einer Folierung vor Verschmutzung geschützt sein, ebenso ist es jedoch möglich, den KLT insgesamt oder zumindest auf seiner Oberseite mit einer Folie zu umschließen oder verschließen. Weiterhin kann ein Verschmutzungsschutz auch mittels eines wiederverwendbaren Deckels des KLTs erfolgen.

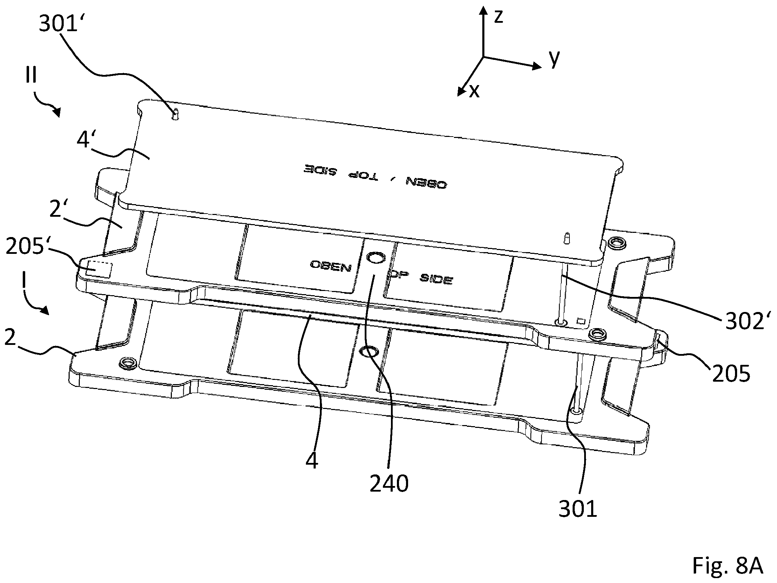

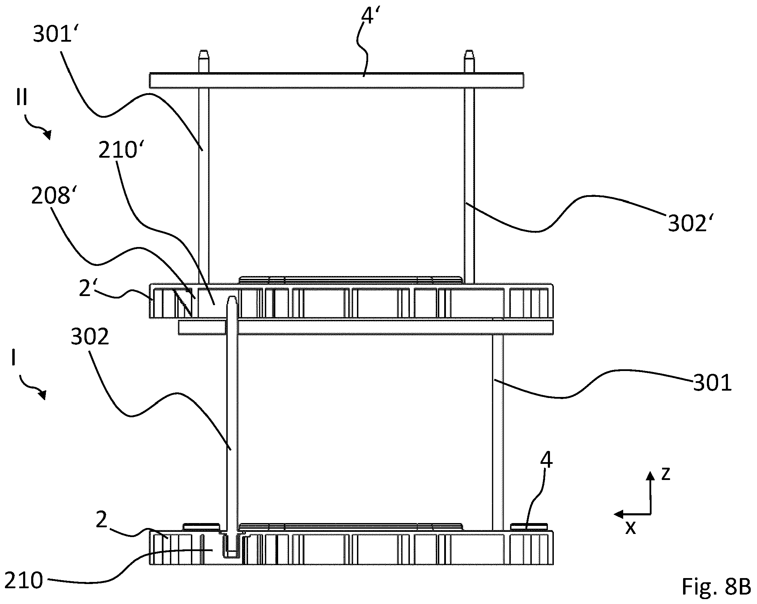

Fig. 8A zeigt eine perspektivische Ansicht einer zusammengesetzten Baugruppe I umfassend eine Grundplatte 2 mit eingeschraubten Bolzen 3 und Deckplatte 4. Bezüglich der Ausprägung der Grundplatte 2, der Bolzen 3 und der Deckplatte 4 wird auf die Ausführungen zu den obigen Figuren verwiesen. Auf der Baugruppe I ist eine weitere derartige Baugruppe II aufgestapelt, ebenfalls umfassend Grundplatte 2' mit eingeschraubten Bolzen 3' und eine Deckplatte 4'. Der Aufbau der aufgestapelten Baugruppe II entspricht im Wesentlichen dem Aufbau der unteren Baugruppe I, die beispielsweise oben bezüglich Figur 3A beschrieben ist. Die Figur 8B zeigt eine Schnittansicht durch die in Figur 8A gezeigten gestapelten Baugruppen I und II. Der Schnitt verläuft durch den Bolzen 302 und parallel zur xz-Ebene.

Die untere Baugruppe I ist dabei relativ zur oberen Baugruppe II um 180° um den Mittelpunkt des Steges 240 gedreht, wie auch an der Position der jeweiligen Codierung 205, 205' deutlich wird. Hierdurch sind die Bolzen 301' und 302' sind gegenüber den Bolzen 302 und 301 versetzt angeordnet, sodass sie bei einer Stapelung der Baugruppen nicht kollidieren. Auf einer Unterseite der Grundplatte 2' der aufgestapelten Baugruppe sind Ausnehmungen 210' vorgesehen, in die die oberen Enden der Bolzen 301 und 302 hineinragen. Die Ausnehmungen 210' können insbesondere Aussparungen zwischen Versteifungsrippen 208' an der Unterseite der Grundplatte 2' sein. Die Grundplatte 2 kann ferner Ausnehmungen 210 aufweisen, in die obere Enden von Bolzen 301' und 302' eintauchen können. So können beliebig viele Baugruppen I und II übereinandergestapelt werden, wobei die oberen Enden der jeweiligen Bolzen 301/302 bzw. 301'/302' jeweils in Ausnehmungen 210' bzw. 210 eintauchen können.

Die vorliegende Offenbarung umfasst ferner die folgenden Aspekte:
1. Verpackungsanordnung mit einer Grundplatte, mindestens einem an der Grundplatte (2) befestigten ersten Bolzen (301) und einer Vielzahl von Separatorplatten (1) für ein elektrochemisches System, die entlang einer Stapelrichtung auf der Grundplatte (2) einen Separatorplattenstapel bildend gestapelt sind, wobei der erste Bolzen (301) in entlang der Stapelrichtung fluchtenden ersten Aussparungen (101) der gestapelten Separatorplatten (1) aufgenommen ist.
2. Verpackungsanordnung nach Aspekt 1, mit mindestens einem an der Grundplatte (2) befestigten zweiten Bolzen (302), wobei der zweite Bolzen (302) in entlang der Stapelrichtung fluchtenden zweiten Aussparungen (102) der gestapelten Separatorplatten (1) aufgenommen ist.
3. Verpackungsanordnung nach Aspekt 2, wobei der erste Bolzen (301) und der zweite Bolzen (302) den Separatorplattenstapel relativ zur Grundplatte (2) entlang einer ersten Richtung senkrecht zur Stapelrichtung und entlang einer zweiten Richtung senkrecht zur Stapelrichtung und senkrecht zur ersten Richtung fixieren.
4. Verpackungsanordnung nach Aspekt 2 oder 3, wobei die Separatorplatten (1) senkrecht zur Stapelrichtung eine rechteckige oder eine im Wesentlichen rechteckige Form haben, wobei die ersten Aussparungen (101) und die zweiten Aussparungen (102) der Separatorplatten (1) in einander diagonal gegenüberliegenden Eckbereichen der Separatorplatten ausgebildet sind.
5. Verpackungsanordnung nach einem der vorhergehenden Aspekte, mit einer Deckplatte (4), wobei der Separatorplattenstapel in Stapelrichtung zwischen der Grundplatte (2) und der Deckplatte (4) angeordnet ist.
6. Verpackungsanordnung nach einem der Aspekte 2 bis 4 und nach Aspekt 5, wobei die Deckplatte (4) eine erste Aussparung (401) aufweist, die entlang der Stapelrichtung mit den ersten Aussparungen (101) der Separatorplatten (1) fluchtet, und wobei die Deckplatte (4) mindestens eine zweite Aussparung (402) aufweist, die entlang der Stapelrichtung mit den zweiten Aussparungen (102) der Separatorplatten (1) fluchtet, wobei der erste Bolzen (301) zusätzlich in der ersten Aussparung (401) der Deckplatte (4) aufgenommen ist und wobei der zweite Bolzen (302) zusätzlich in der zweiten Aussparung (402) der Deckplatte (4) aufgenommen ist.
7. Verpackungsanordnung nach einem der vorhergehenden Aspekte, wobei Eckbereiche (201a, 201b, 202c, 201d) der Grundplatte (2) über Eckbereiche des Separatorplattenstapels hinausragen und/oder Eckbereiche der Deckplatte (4) über Eckbereiche des Separatorplattenstapels hinausragen.
8. Verpackungsanordnung nach einem der Aspekte 5 bis 7, mit einer flexiblen Folie (5), die die Grundplatte (2), den Separatorplattenstapel und die Deckplatte (4) wenigstens bereichsweise umschließt.
9. Verpackungsanordnung nach einem der Aspekte 5 bis 8, mit mindestens einem Band (502, 502'), das die Grundplatte und (2) und die Deckplatte (4) und den Separatorplattenstapel wenigstens bereichsweise umläuft, insbesondere umschließt.
10. Verpackungsanordnung nach einem der beiden vorhergehenden Ansprüche, wobei die flexible Folie (5) und/oder das mindestens eine Band (502, 502') den Separatorplattenstapel in Stapelrichtung zwischen der Grundplatte (2) und der Deckplatte (4) einspannt/einspannen.
11. Verpackungsanordnung nach einem der Aspekte 8 bis 10, wobei die flexible Folie (5) als Schrumpffolie ausgebildet ist.
12. Verpackungsanordnung nach einem der Aspekte 10 und 11, mit einem in die flexible Folie (5) integrierten Aufreißfaden zum Öffnen und/oder Entfernen der flexiblen Folie (5).
13. Verpackungsanordnung nach einem der vorhergehenden Aspekte, wobei die ersten und/oder die zweiten Aussparungen (101, 102) der Separatorplatten (1) als von Rändern der Separatorplatten (1) beabstandete Durchgangslöcher ausgebildet sind.
14. Verpackungsanordnung nach einem der vorhergehenden Aspekte, wobei die Separatorplatten (1) jeweils einen aktiven Bereich mit Strukturen zur Medienführung entlang einer Flachseite der Separatorplatte (1) sowie eine in sich geschlossene und den aktiven Bereich umlaufende Dichtanordnung (104) zum Abdichten des aktiven Bereichs aufweisen, wobei die ersten Aussparungen (101) und/oder die zweiten Aussparungen (102) der Separatorplatten (1) jeweils außerhalb der Dichtanordnung (104) angeordnet sind.
15. Verpackungsanordnung nach einem der vorhergehenden Aspekte, wobei die Separatorplatten (1) jeweils einen aktiven Bereich mit Strukturen zur Medienführung entlang einer Flachseite der Separatorplatte (1) sowie eine in sich geschlossene und den aktiven Bereich umlaufende Dichtanordnung (104) zum Abdichten des aktiven Bereichs aufweisen, wobei die Grundplatte (2) wenigstens eine Durchgangsöffnung (204) aufweist, die derart angeordnet ist, dass eine Projektion der Durchgangsöffnung (204) auf die Separatorplatten (1) entlang der Stapelrichtung wenigstens bereichsweise mit den aktiven Bereichen der Separatorplatten (1) zusammenfällt.
16. Verpackungsanordnung nach einem der vorhergehenden Aspekte, wobei die Grundplatte (2) entlang einer ersten Richtung senkrecht zur Stapelrichtung an einander gegenüberliegenden Enden des Separatorplattenstapels wenigstens bereichsweise über den Separatorplattenstapel hinausragt und wobei die Grundplatte (2) entlang einer zweiten Richtung senkrecht zur Stapelrichtung und senkrecht zur ersten Richtung an einander gegenüberliegenden Enden des Separatorplattenstapels wenigstens bereichsweise über den Separatorplattenstapel hinausragt.
17. Verpackungsanordnung nach Aspekt 16, wobei die Grundplatte (2) in zweien der an einander gegenüberliegenden Enden des Separatorplattenstapels über den Separatorplattenstapel hinausragenden Bereiche jeweils einen Griff (202) oder eine Struktur zum Aufnehmen eines Greifwerkzeugs aufweist.
18. Verpackungsanordnung nach einem der vorhergehenden Aspekte, wobei die Separatorplatten (1) aus Metallblechen mit einer Blechstärke von höchstens 0,5 mm, vorzugsweise höchstens 0,2 mm, vorzugsweise höchstens 0,1 mm, vorzugsweise höchstens 0,075 mm und insbesondere höchstens 0,05 mm gebildet sind.
19. Verpackungssystem, mit einem Kleinlastträger (7) und mit wenigstens zwei Verpackungsanordnungen nach einem der vorhergehenden Aspekte, die in dem Kleinlastträger (7) aufgenommen sind, wobei der Kleinlastträger (7) und die Grundplatten (2) der Verpackungsanordnungen derart dimensioniert sind, dass die Grundplatten (2) nebeneinander formschlüssig oder im Wesentlichen formschlüssig im Kleinlastträger (7) aufgenommen sind.
20. Verfahren zum Verpacken von Separatorplatten für ein elektrochemisches System, insbesondere zu einer Verpackungsanordnung gemäß einem der Aspekte 1 bis 18, das Verfahren umfassend die Schritte:
   Stapeln einer Vielzahl von Separatorplatten (1) für ein elektrochemisches System auf einer Grundplatte (2) derart, dass wenigstens ein an der Grundplatte (2) befestigter Bolzen (301) in entlang einer Stapelrichtung fluchtenden Aussparungen (101) der gestapelten Separatorplatten (1) aufgenommen wird/ist.
21. Verfahren nach Aspekt 20, wobei das Stapeln der Separatorplatten (1) auf der Grundplatte (2) ein Stapeln der Separatorplatten (1) auf einer durch eine Durchgangsöffnung (204) der Grundplatte (2) hindurchgreifenden und entlang der Stapelrichtung verfahrbaren Hebe- und Senkvorrichtung (6) und ein Absenken der Hebe- und Senkvorrichtung (6) umfasst.
22. Verfahren nach Aspekt 20 oder 21, ferner umfassend:
   Anordnen einer Deckplatte (4) auf dem Separatorplattenstapel, so dass der Separatorplattenstapel entlang der Stapelrichtung zwischen der Grundplatte (2) und der Deckplatte (4) angeordnet ist, und Umschließen oder Umlaufen der Grundplatte (2), des Separatorplattenstapels und der Deckplatte (4) mit einer flexiblen Folie (5) oder mindestens einem Band (502, 502'), die bzw. das den Separatorplattenstapel zwischen der Grundplatte (2) und der Deckplatte (4) einspannt.

## Patentansprüche

1. Verpackungsanordnung mit einer Grundplatte, mindestens einem an der Grundplatte (2) befestigten ersten Bolzen (301) und einer Vielzahl von Separatorplatten (1) für ein elektrochemisches System, die entlang einer Stapelrichtung auf der Grundplatte (2) einen Separatorplattenstapel bildend gestapelt sind, wobei der erste Bolzen (301) in entlang der Stapelrichtung fluchtenden ersten Aussparungen (101) der gestapelten Separatorplatten (1) aufgenommen ist.

2. Verpackungsanordnung nach Anspruch 1, mit mindestens einem an der Grundplatte (2) befestigten zweiten Bolzen (302), wobei der zweite Bolzen (302) in entlang der Stapelrichtung fluchtenden zweiten Aussparungen (102) der gestapelten Separatorplatten (1) aufgenommen ist.

3. Verpackungsanordnung nach Anspruch 2, wobei der erste Bolzen (301) und der zweite Bolzen (302) den Separatorplattenstapel relativ zur Grundplatte (2) entlang einer ersten Richtung senkrecht zur Stapelrichtung und entlang einer zweiten Richtung senkrecht zur Stapelrichtung und senkrecht zur ersten Richtung fixieren.

4. Verpackungsanordnung nach einem der vorhergehenden Ansprüche, mit einer Deckplatte (4), wobei der Separatorplattenstapel in Stapelrichtung zwischen der Grundplatte (2) und der Deckplatte (4) angeordnet ist.

5. Verpackungsanordnung nach einem der vorhergehenden Ansprüche, wobei Eckbereiche (201a, 201b, 202c, 201d) der Grundplatte (2) über Eckbereiche des Separatorplattenstapels hinausragen und/oder Eckbereiche der Deckplatte (4) über Eckbereiche des Separatorplattenstapels hinausragen
und/oder
wobei die Grundplatte (2) entlang einer ersten Richtung senkrecht zur Stapelrichtung an einander gegenüberliegenden Enden des Separatorplattenstapels wenigstens bereichsweise über den Separatorplattenstapel hinausragt und wobei die Grundplatte (2) entlang einer zweiten Richtung senkrecht zur Stapelrichtung und senkrecht zur ersten Richtung an einander gegenüberliegenden Enden des Separatorplattenstapels wenigstens bereichsweise über den Separatorplattenstapel hinausragt.

6. Verpackungsanordnung nach einem der Ansprüche 4 oder 5, mit einer flexiblen Folie (5), die die Grundplatte (2), den Separatorplattenstapel und die Deckplatte (4) wenigstens bereichsweise umschließt.

7. Verpackungsanordnung nach einem der Ansprüche 5 oder 6, mit mindestens einem Band (502, 502'), das die Grundplatte und (2) und die Deckplatte (4) und den Separatorplattenstapel wenigstens bereichsweise umläuft, insbesondere umschließt.

8. Verpackungsanordnung nach Anspruch 7, wobei die Grundplatte (2) in zweien der an einander gegenüberliegenden Enden des Separatorplattenstapels über den Separatorplattenstapel hinausragenden Bereiche jeweils einen Griff (202) oder eine Struktur zum Aufnehmen eines Greifwerkzeugs aufweist.

9. Verpackungsanordnung nach einem der Ansprüche 5 - 8, wobei die flexible Folie (5) als Schrumpffolie ausgebildet ist und/oder die Verpackungseinheit aufweisend einen in die flexible Folie (5) integrierten Aufreißfaden zum Öffnen und/oder Entfernen der flexiblen Folie (5).

10. Verpackungsanordnung nach einem der vorhergehenden Ansprüche, wobei die ersten und/oder die zweiten Aussparungen (101, 102) der Separatorplatten (1) als von Rändern der Separatorplatten (1) beabstandete Durchgangslöcher ausgebildet sind.

11. Verpackungsanordnung nach einem der vorhergehenden Ansprüche, wobei die Separatorplatten (1) jeweils einen aktiven Bereich mit Strukturen zur Medienführung entlang einer Flachseite der Separatorplatte (1) sowie eine in sich geschlossene und den aktiven Bereich umlaufende Dichtanordnung (104) zum Abdichten des aktiven Bereichs aufweisen, wobei die Grundplatte (2) wenigstens eine Durchgangsöffnung (204) aufweist, die derart angeordnet ist, dass eine Projektion der Durchgangsöffnung (204) auf die Separatorplatten (1) entlang der Stapelrichtung wenigstens bereichsweise mit den aktiven Bereichen der Separatorplatten (1) zusammenfällt.

12. Verpackungssystem, mit einem Kleinlastträger (7) und mit wenigstens zwei Verpackungsanordnungen nach einem der vorhergehenden Ansprüche, die in dem Kleinlastträger (7) aufgenommen sind, wobei der Kleinlastträger (7) und die Grundplatten (2) der Verpackungsanordnungen derart dimensioniert sind, dass die Grundplatten (2) nebeneinander formschlüssig oder im Wesentlichen formschlüssig im Kleinlastträger (7) aufgenommen sind.

13. Verfahren zum Verpacken von Separatorplatten für ein elektrochemisches System, insbesondere zu einer Verpackungsanordnung gemäß einem der Ansprüche 1 bis 18, das Verfahren umfassend die Schritte: Stapeln einer Vielzahl von Separatorplatten (1) für ein elektrochemisches System auf einer Grundplatte (2) derart, dass wenigstens ein an der Grundplatte (2) befestigter Bolzen (301) in entlang einer Stapelrichtung fluchtenden Aussparungen (101) der gestapelten Separatorplatten (1) aufgenommen wird/ist.

14. Verfahren nach Anspruch 13, wobei das Stapeln der Separatorplatten (1) auf der Grundplatte (2) ein Stapeln der Separatorplatten (1) auf einer durch eine Durchgangsöffnung (204) der Grundplatte (2) hindurchgreifenden und entlang der Stapelrichtung verfahrbaren Hebe- und Senkvorrichtung (6) und ein Absenken der Hebe- und Senkvorrichtung (6) umfasst.

15. Verfahren nach Anspruch 14 oder 15, ferner umfassend: Anordnen einer Deckplatte (4) auf dem Separatorplattenstapel, so dass der Separatorplattenstapel entlang der Stapelrichtung zwischen der Grundplatte (2) und der Deckplatte (4) angeordnet ist, und Umschlie-ßen oder Umlaufen der Grundplatte (2), des Separatorplattenstapels und der Deckplatte (4) mit einer flexiblen Folie (5) oder mindestens einem Band (502, 502'), die bzw. das den Separatorplattenstapel zwischen der Grundplatte (2) und der Deckplatte (4) einspannt.
